# FASCICULE DE BREVET EUROPEEN

(11) **EP 0 844 172 B1**
(45) Date de publication et mention de la délivrance du brevet: **16.04.2003**
(21) Numéro de dépôt: 97402788.0
(22) Date de dépôt: 20.11.1997
(51) Int. Cl.: B64D 27/26

(54) **Suspension avant redondante pour turbomachine**
Redundantes, vorderes Aufhängungssystem für ein Turbotriebwerk
Redundant front suspension for a turbine engine

(30) Priorité: 21.11.1996 FR 9614190
(43) Date de publication de la demande: 27.05.1998
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Demouzon, Francis Michel, 77240 Cesson (FR); Huet, Patrick Jean Alibert, 91090 Lisses (FR); Fer, René Pierre, 77190 Dammarie Les Lys (FR); Marnas, Laurent Pierre Elysée Gaston, 77000 Vaux Le Penil (FR)

(56) Documents cités:
- WO-A-93/11041
- FR-A- 2 217 549
- US-A- 4 065 077

## Description

L'invention concerne un dispositif comprenant un carter intermédiaire de turbomachine et une suspension avant redondante d'une turbomachine destinée à être fixée sur un mât porté par un avion, selon le préambule de la revendication 1. Le mot "avant" étant pris par rapport au sens de l'écoulement du flux dans le moteur pour désigner la partie de la turbomachine éloignée de la zone d'éjection du flux.

De façon connue, une turbomachine d'aviation est accrochée à un mât, conçu pour assurer la transmission mécanique des efforts entre la turbomachine et la structure de l'avion, au moyen d'un dispositif de suspension arrière. Ces dispositifs de suspension doivent supporter les efforts mécaniques, selon l'axe vertical Z, dus à la masse de la turbomachine, et les efforts dynamiques selon l'axe transversal Y, induits par les mouvements de l'avion. Les charges générées par la poussée du moteur, dirigées selon l'axe longitudinal X, sont transmises à l'un des dispositifs de suspension par des barres de reprise de poussée inclinées situées de part et d'autre de la turbomachine.

De plus pour des raisons évidentes de sécurité, la suspension de la turbomachine doit être redondante. Dans ce cas, il est possible de choisir entre deux solutions : soit doubler toutes les pièces, chacune étant capable de supporter seule les efforts fixés, soit adjoindre des composants qui sont disposés en attente et qui ne supportent les efforts qu'en cas de rupture de la suspension principale.

US-A-4065 077 décrit une suspension avant d'une turbomachine sur mât, cette suspension comportant un support de base pour assurer la transmission des efforts selon les axes transversal et vertical et une bielle fixée à des chapes pour un assemblage à pions pour reprendre les forces de poussée selon l'axe longitudinal.

Les chapes comportent une extrémité montée avec jeux pour reprendre les efforts en cas de défaillance de la suspension normale. Cependant ce type de suspension ne permet d'assurer une sécurité suffisante en cas de rupture de l'un des éléments de suspension car les chapes participent également à la transmission des efforts au mât lors du fonctionnement normal.

Le but de l'invention est d'équiper une suspension normale avant d'une turbomachine sur un mât avec une pièce en attente susceptible de supporter les efforts selon les axes X, Y et Z en cas de défaillance de la suspension normale.

Selon l'invention le dispositif de suspension de sécurité comporte une pièce destinée à être interposée entre le mât et le support de base et qui comporte à l'avant un arbre parallèle à l'axe longitudinal X et logeant avec jeu dans un alésage du carter intermédiaire, cet arbre étant capable de reprendre les efforts selon les axes X, Y et Z, en cas de rupture de l'un des éléments de la suspension normale.

D'autres avantages et caractéristiques de l'invention ressortiront à la lecture de la description suivante faite à titre d'exemple et en référence aux dessins annexés dans lesquels :
La figure 1 montre en perspective l'ensemble de la suspension avant redondante selon l'invention monté sur le mât d'un avion, la turbomachine n'étant pas représentée par souci de clarté ;
La figure 2 est une représentation en perspective de la suspension normale de la turbomachine et des barres de reprise de poussée ;
La figure 3 montre le mât de l'avion et le talon associé au mât;

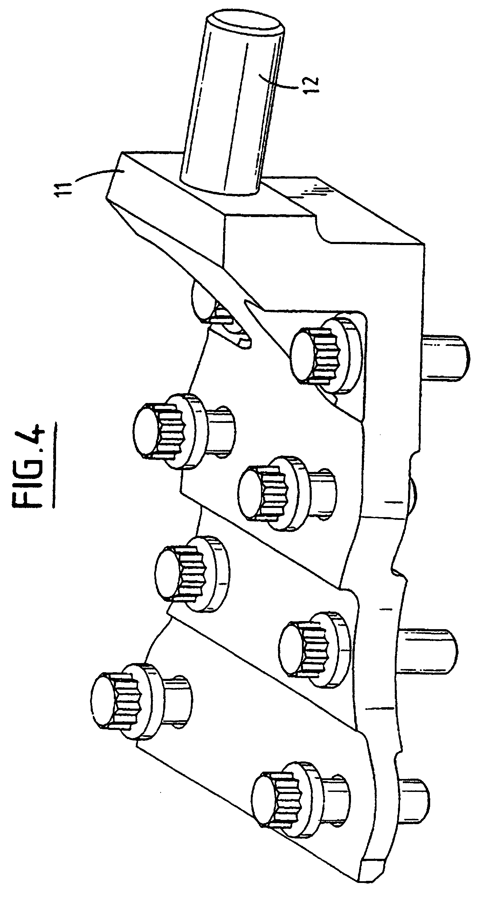

La figure 4 montre le dispositif de suspension de sécurité seul ;
La figure 5 est une vue latérale de la suspension avant redondante selon l'invention ; et
La figure 6 montre en détail les moyens de reprise des efforts selon l'axe longitudinal X.

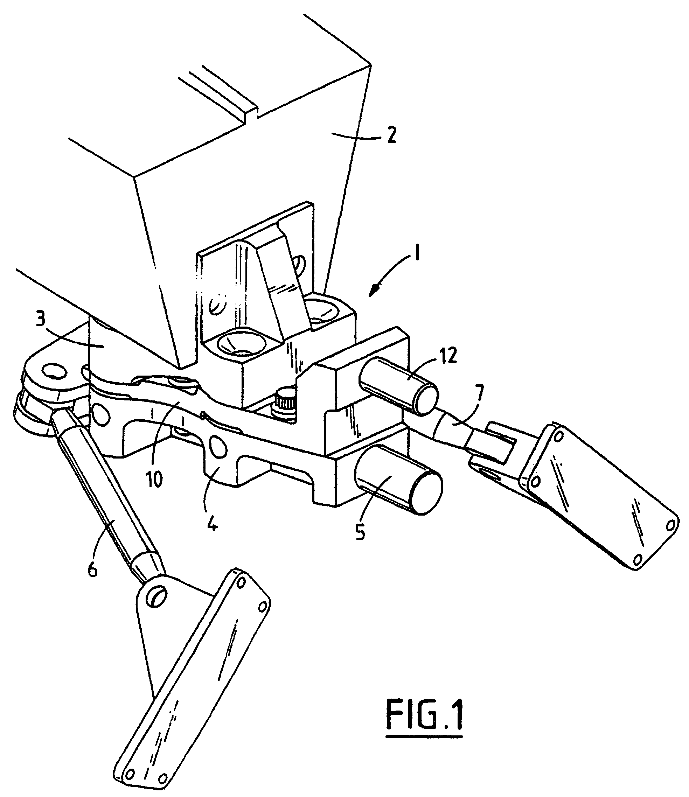

La figure 1 montre une suspension avant redondante 1 d'une turbomachine sur le mât 2 d'un avion. Par souci de clarté, la turbomachine n'est pas représentée sur les dessins. Il suffit de savoir que le point de suspension avant de la turbomachine est prévu sur le carter intermédiaire 13 de cette turbomachine.

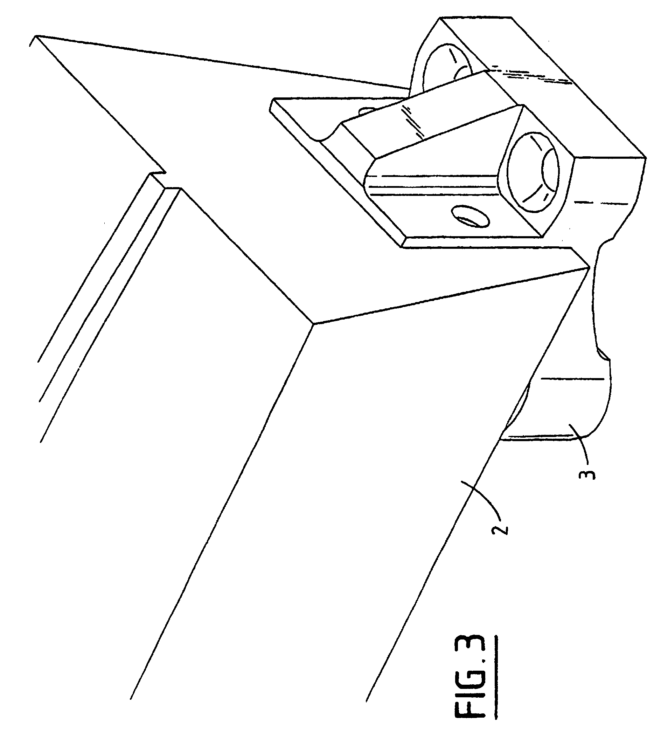

Le mât 2 est équipé d'un talon 3 qui contient tous les éléments de fixation de la suspension 1 sur le mât, ainsi que cela est représenté sur les figures 1 et 3.

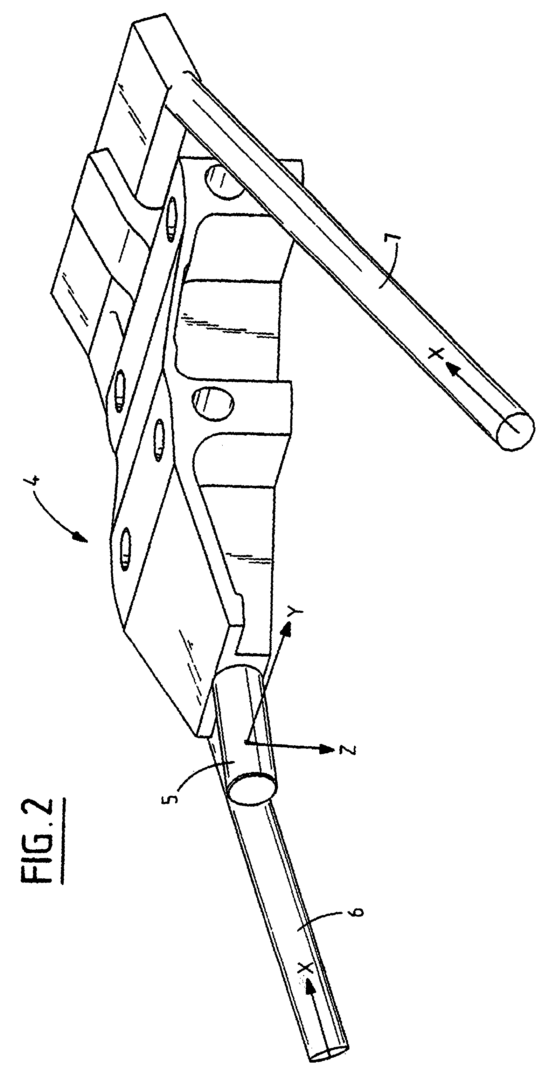

La suspension normale avant de la turbomachine comporte un support de base 4, représenté sur les figures 1 et 2. Ce support de base 4 est fixé habituellement sous le talon 3. Il s'étend vers l'avant de l'avion, dans le sens de l'avancement en vol de ce dernier. Son extrémité avant comporte un axe de support 5 qui est dirigé selon l'axe longitudinal X du trièdre de référence de l'avion et qui constitue l'axe de suspension avant de la turbomachine. Cet axe de support 5 permet la reprise des efforts dirigés suivant l'axe vertical Z et l'axe transversal Y du trièdre de référence, qui sont générés par la masse du moteur, et les efforts dynamiques dus aux accélérations verticales et latérales provoquées par les mouvements de l'avion suivant ces directions.

Les références 6 et 7 représentent les barres de reprise de poussée qui sont inclinées, et dont les extrémités avant sont fixées latéralement sur le carter intermédiaire de la turbomachine. Ces barres de reprise de poussée 6 et 7 supportent les efforts induits par la poussée du moteur et qui est dirigée selon l'axe longitudinal X du trièdre de référence.

A la suspension normale décrite ci-dessus, est adjoint un dispositif de suspension de sécurité 10 qui ne travaille qu'en cas de défaillance d'une barre de reprise de poussée, ou de la suspension normale.

Ce dispositif de suspension de sécurité 10 est réalisé sous la forme d'une pièce monobloc qui est interposée entre la face inférieure du talon 3 et la face supérieure du support de base 4, et qui présente à l'avant une butée verticale 11 à partir de laquelle s'étend un arbre 12 parallèle à l'axe longitudinal X et disposé au-dessus de l'axe de support 5 du support de base 4. La pièce supplémentaire 10 comporte une pluralité d'orifices pour le passage de moyens de fixation par boulonnage afin de recréer l'interface entre le mât 2 et le support de base 4.

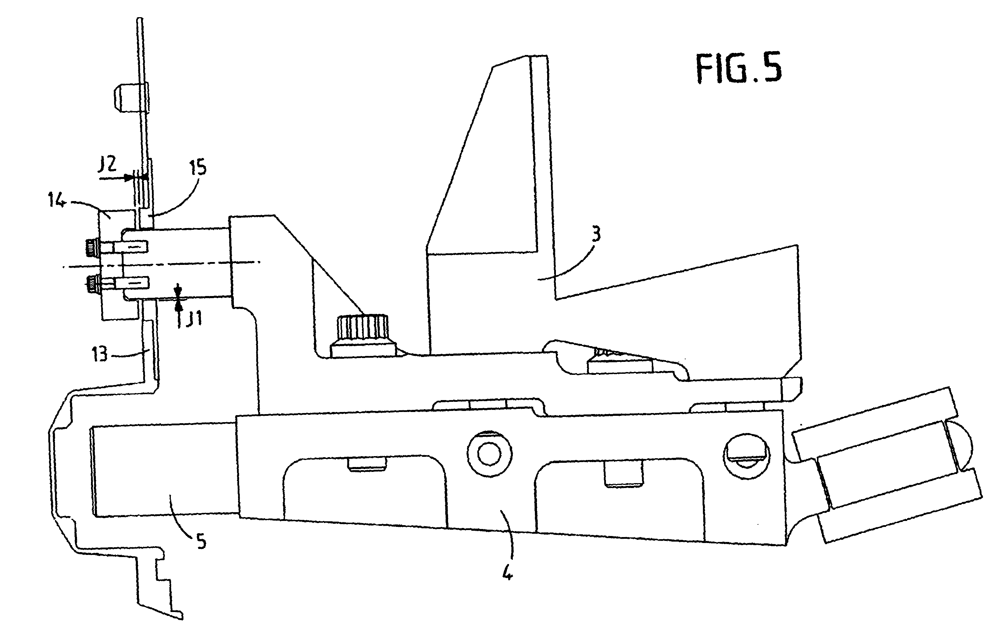

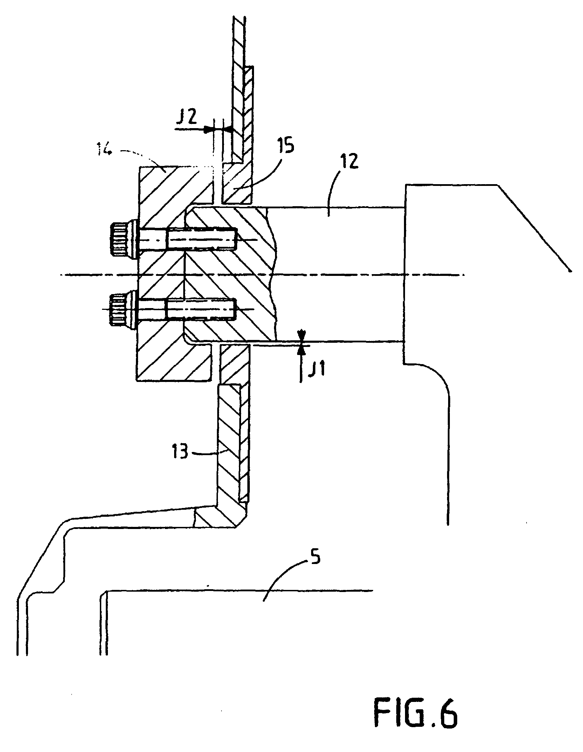

L'arbre 12 est destiné à loger avec jeu dans un alésage approprié du carter intermédiaire 13 de la turbomachine, ainsi que cela est représenté sur les figures 5 et 6.

Cet arbre 12 comporte en son extrémité un dispositif permettant de reprendre les efforts X en cas de défaillance d'une des bielles 6 ou 7.

Un exemple d'un tel dispositif est montré figure 5. Il est composé de deux pièces : une butée 14 fixée en extrémité d'arbre 12 et un couvercle 15 fixé au carter intermédiaire 13. Des jeux J1, entre arbre 12 et couvercle 15, et J2, entre butée 14 et couvercle 15 sont ménagés de façon à ce que cet ensemble ne reprenne pas de charges en fonctionnement normal.

En cas de défaillance de la suspension normale, par suite de rupture de l'axe de support 5 du support de base 4, par exemple, les efforts suivant les axes Y et Z sont supportés par l'axe 12, tandis que les charges suivant l'axe longitudinal X sont supportés par les barres de reprise de poussée 6 et 7.

En cas de rupture de l'une des barres de reprise de poussée 6, 7, les charges suivant l'axe longitudinal X sont reprises par la butée 14 et le couvercle 15, tandis que les efforts suivant les axes Y et Z sont supportés par la suspension normale.

Enfin, en cas de rupture de l'axe support 5 et de l'une des barres de reprises de poussée 6. 7, la totalité des efforts et des charges est transmise du carter intermédiaire 13 au mât 2 par l'intermédiaire du support 10.

## Revendications

1. Dispositif comprenant un carter intermédiaire (13) d'une turbomachine et une suspension avant redondante d'une turbomachine destinée à être fixée sur un mât porté par un avion, cette suspension comportant, d'une part, un support de base (4) et des barres de reprise de poussée (6, 7), ce support de base (4) relié au carter intermédiaire (13) de la turbomachine et destiné à être fixé au mât, pour réaliser la suspension normale avant de la turbomachine, en assurant la transmission mécanique des efforts selon l'axe transversal Y et l'axe vertical Z entre le carter intermédiaire (13) et le mât, pendant que les barres de reprise de poussée (6, 7) destinées à être interposées entre la turbomachine et le support de base (4), assurent la transmission au mât des efforts de poussée selon l'axe longitudinal X, et cette suspension comportant, d'autre part, un dispositif de suspension de sécurité(10),
**caractérisé par le fait que** ledit dispositif de suspension de sécurité (10) comporte
une pièce (10) destinée à être interposée entre le mât et le support de base (4), et qui comporte à l'avant un arbre (12) parallèle à l'axe des X et logeant avec jeu dans un alésage du carter intermédiaire (13), cet arbre (12) étant équipé de moyens permettant de reprendre les efforts selon les axes X, Y et Z transmis par le carter intermédiaire (13) en cas de rupture de l'un des éléments de la suspension normale.

2. Dispositif selon la revendication 1, **caractérisé par le fait que** les moyens pour reprendre les efforts selon l'axe longitudinal X comportent une butée (14) fixée à l'extrémité de l'arbre (12) et un couvercle (15) fixé au carter intermédiaire (13), un jeu (J1) étant ménagé entre l'arbre (12) et le couvercle (15) et un jeu (J2) étant ménagé entre la butée (14) et le couvercle (15).

3. Dispositif selon l'une quelconque des revendications 1 ou 2, **caractérisé par le fait que** la pièce (10) destinée à être interposée entre le mât et le support de la base (4) comporte une pluralité d'orifices pour le passage de moyens de fixation par boulonnage afin de recréer l'interface entre le mât et le support de base (4).

## Claims

1. Device comprising an intermediate case (13) of a turbine engine and a redundant front suspension of a turbine engine intended to be fixed to a pylon carried by an aeroplane, this suspension comprising, on the one hand, a base support (4) and thrust-reacting bars (6, 7), this base support (4) connected to the intermediate case (13) of the turbine engine and intended to be fixed to the pylon so as to provide the normal front suspension of the turbine engine, while at the same time providing mechanical transmission of loads along the transverse axis Y and vertical axis X between the intermediate case (13) and the pylon, while the thrust-reacting bars (6, 7) intended to be inserted between the turbine engine and the base support (4) transmit thrust forces along the longitudinal axis X to the pylon, and this suspension further comprising a back-up suspension device (10),
**characterized in that** the said back-up suspension device (10) comprises
a part (10) intended to be inserted between the pylon and the base support (4) and which comprises, at the front, a shaft (12) parallel to the X-axis and housed with clearance in a bore of the intermediate case (13), this shaft (12) being equipped with means for reacting the forces along the X, Y and Z axes transmitted by the intermediate case (13) if one of the elements of the normal suspension should break.

2. Device according to Claim 1, **characterized in that** the means for reacting the forces along the longitudinal axis X comprise a stop (14) fixed to the end of the shaft (12) and a cover (15) fixed to the intermediate case (13), there being a clearance (J1) between the shaft (12) and the cover (15) and a clearance (J2) between the stop (14) and the cover (15).

3. Device according to either one of Claims 1 and 2, **characterized in that** the part (10) intended to be inserted between the pylon and the base support (4) comprises a number of orifices for the passage of bolt-fastening means so as to recreate the interface between the pylon and the base support (4).

## Patentansprüche

1. Vorrichtung mit einem Zwischengehäuse (13) eines Turbotriebwerks und einem redundanten vorderen Aufhängungssystem für ein Turbotriebwerk, das dazu bestimmt ist, an einem Stiel befestigt zu werden, der an einem Flugzeug angebracht ist, wobei dieses Aufhängungssystem einerseits einen Grundrahmen (4) und Stangen zur Schubaufnahme (6, 7) umfasst, wobei dieser Grundrahmen (4) mit dem Zwischengehäuse (13) des Turbotriebwerks verbunden ist und dazu bestimmt ist, an dem Stiel befestigt zu werden, um die vordere Aufhängung des Turbotriebwerks in der Normalen zu gewährleisten, wobei die mechanische Übertragung der Kräfte entlang der Querachse Y und der vertikalen Achse Z zwischen dem Zwischengehäuse (13) und dem Stid gewährleistet wird, während die Stangen zur Schubaufnahme (6, 7), die dazu vorgesehen sind, zwischen dem Turbotriebwerk und dem Grundrahmen (4) angeordnet zu werden, die Übertragung der Schubkräfte entlang der Längsachse X auf den Stiel gewährleisten, und wobei dieses Aufhängungssystem andererseits eine Sicherheitsaufhängungsvorrichtung (10) umfasst,
**dadurch gekennzeichnet, dass** diese Sicherheitsaufhängungsvorrichtung (10) aus einem Teil (10) besteht, das dazu vorgesehen sind, zwischen dem Stiel und dem Grundrahmen (4) angeordnet zu werden, und das vorn eine Welle (12) aufweist, die parallel zur Achse X verläuft und mit Spiel in einer Bohrung des Zwischengehäuses (13) lagert, wobei diese Welle (12) mit Mitteln ausgerüstet ist, die es ermöglichen, im Falle eines Bruchs eines der Elemente der normalen Aufhängung die von dem Zwischengehäuse (13) übertragenen, entlang der Achsen X, Y und Z wirkenden Kräfte aufzunehmen.

2. Aufhängung nach Anspruch 1,
**dadurch gekennzeichnet, dass** die Mittel zu Aufnahme der entlang der Längsachse X wirkenden Kräfte aus einem am Ende der Welle (12) befestigten Anschlag (14) und einem an dem Zwischengehäuse (13) angebrachten Deckel (15) bestehen, wobei ein Spiel (J1) zwischen der Welle (12) und dem Deckd (15) vorgesehen ist und ein Spiel (J2) zwischen dem Anschlag (14) und dem Deckel (15) vorgesehen ist.

3. Aufhängung nach einem der Ansprüche 1 oder 2,
**dadurch gekennzeichnet, dass** das Teil (10), das dazu vorgesehen sind, zwischen dem Stiel und dem Grundrahmen (4) angeordnet zu werden, eine Vielzahl von Öffnungen für den Durchgang von Schraubverbindungsmitteln aufweist, um die Grenzfläche zwischen dem Stiel und dem Grundrahmen (4) zu schaffen.
